# EUROPEAN PATENT APPLICATION

(11) **EP 3 462 808 A1**
(43) Date of publication of application: **03.04.2019**
(21) Application number: 17194181.8
(22) Date of filing: 29.09.2017
(51) Int. Cl.: H04W 92/02, H04W 16/14

(54) **ACCESS POINT DEVICE AND TECHNIQUES FOR CONTROLLING A DECENTRALIZED WIRELESS NETWORK**

(71) Applicant: Intel Corporation, Santa Clara, CA 95054 (US)
(72) Inventor: MUECK, Markus Dominik, 82008 Unterhaching (DE); DREWES, Christian, 82110 Germering (DE); KARLS, Ingolf, 85622 Feldkirchen (DE); PAITARIS, George, 3117673 Kallithea (GR); TSAGKARIS, Kostas, 16121 Athens (GR); DEMESTICHAS, Panagiotis, 18532 Piraeus (GR)
(74) Representative: Lambsdorff & Lange Patentanwälte Partnerschaft mbB

(57) **Abstract**

The disclosure relates to an Access Point (AP) device comprising: a first interface with a decentralized wireless communication network; a second interface with a central controller of a centralized mobile communication network; a first application programming circuitry configured to control accessing the decentralized wireless communication network via the first interface, and a second application programming circuitry configured to interact with the central controller of the centralized mobile communication network via the second interface in order to allow the central controller take over control of the decentralized wireless communication network.

## Description

### FIELD

The disclosure relates to an access point (AP) device and techniques for controlling a decentralized wireless communication network. In particular, the disclosure relates to integration of a decentralized network such as WiFi into a centralized network such as Spectrum Access System (SAS) or Licensed Shared Access (LSA) system through application layer communication using standardized Application Programming Interfaces (APIs).

### BACKGROUND

Spectrum Access System (SAS) based spectrum sharing will be applied in the US in the 3.5 GHz band (and possibly in further bands in the future). In Europe, the so-called Licensed Shared Access (LSA) system will be implemented in the 2.3-2.4 GHz band. In SAS three types of users are defined: i) Incumbent (highest priority), ii) Priority Access License (PAL) User (2^{nd} level of priority) and iii) General Authorized Access (GAA) Users such as MuLTEfire, etc. with specific changes to address SAS requirements (such as Incumbent protection, etc.). Currently there is no mechanism defined for coupling a WiFi network to the SAS system.

### BRIEF DESCRIPTION OF THE DRAWINGS

The accompanying drawings are included to provide a further understanding of aspects and are incorporated in and constitute a part of this specification. The drawings illustrate aspects and together with the description serve to explain principles of aspects.

Other aspects and many of the intended advantages of aspects will be readily appreciated as they become better understood by reference to the following detailed description. Like reference numerals designate corresponding similar parts.
Fig. 1 is a block diagram of a Spectrum Access System (SAS) 100 for spectrum management according to the FCC regulation.
Fig. 2 is a block diagram of a Licensed Shared Access (LSA) system 200 as currently defined in Europe.
Fig. 3 is schematic diagram illustrating an exemplary communication system 300 in which WiFi APs 321, 331 are used to integrate WiFi networks 320, 330 in an SAS system controlled by an SAS controller 311 according to the disclosure.
Fig. 4 is a schematic diagram illustrating an exemplary WiFi stack 400.
Fig. 5 is a schematic diagram illustrating an exemplary SAS compliant WiFi equipment 500 according to the disclosure.
Fig. 6 is a schematic diagram illustrating an exemplary SAS compliant GAA WiFi access point (AP) 600 according to the disclosure.
Fig. 7 is schematic diagram illustrating an access point (AP) device 700 according to the disclosure.
Fig. 8 is schematic diagram illustrating a method 800 for controlling a decentralized wireless communication network according to the disclosure.

### DETAILED DESCRIPTION

In the context of this disclosure, spectrum access systems and spectrum access networks are described for sharing spectrum resources between different radio networks according to a spectrum sharing scheme.

Any of the radio networks and radio links may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others, the European ITS-G5 system (i.e. the European flavor of IEEE 802.11p based DSRC, including ITS-G5A (i.e., Operation of ITS-G5 in European ITS frequency bands dedicated to ITS for safety re-lated applications in the frequency range 5,875 GHz to 5,905 GHz), ITS-G5B (i.e., Operation in European ITS frequency bands dedicated to ITS non- safety applications in the frequency range 5,855 GHz to 5,875 GHz), ITS-G5C (i.e., Operation of ITS applications in the frequency range 5,470 GHz to 5,725 GHz)), etc.

The scheme can be used in the context of any spectrum management scheme including dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies). Applicable spectrum bands include IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc). Note that some bands are limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 64 - 71 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

Note furthermore that a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

The scheme can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense. The following terms, abbreviations and notations will be used herein.
- 3GPP:: 3rd Generation Partnership Project,
- LTE:: Long Term Evolution,
- LTE-A:: LTE Advanced, Release 10 and higher versions of 3GPP LTE,
- BS:: Base station, eNodeB,
- FCC:: Federal Communications Commission,
- SAS:: Spectrum Access System,
- LSA:: Licensed Shared Access
- PA:: Priority Access,
- GAA:: General Authorized Access,
- PAL:: Priority Access Licenses,
- ASA:: Authorized Shared Access,
- CSS:: Cloud Spectrum Services,
- RF:: Radio Frequency,
- UE:: User Equipment,
- MIMO:: Multiple Input Multiple Output,
- TDD:: Time Division Duplex,
- FDD:: Frequency Division Duplex,
- CBSD:: Citizen Broadband Radio Service Device

It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

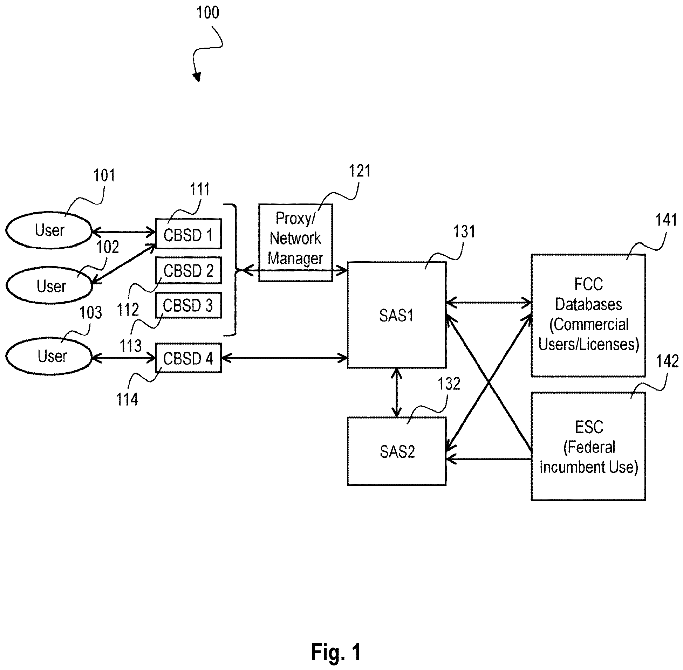

The methods and devices described hereinafter may be applied in SAS systems, e.g. SAS systems 100 as shown in Fig. 1. The FCC (Federal Communications Commission) released a Report and Order outlining the rules for operating wireless devices in the 3.5GHz band that spans from 3550 - 3700 MHz. FCC released this spectrum for sharing with the incumbents, which means that the incumbents get priority in that band and it can be used by broadband devices when (and where) incumbents are not using the spectrum. The incumbents in this band include DoD radars. There are two additional tiers of spectrum users in addition to the incumbents namely the Priority Access (PA) and General Authorized Access (GAA). The Priority Access Licenses (PAL) users get protection from GAA users which is similar to unlicensed spectrum.

The FCC also mandates a Spectrum Access System (SAS) that will coordinate the spectrum use between the incumbents, PA and GAA. The SAS is central to this band, and no tier 2 or tier 3 device can operate unless it is in constant communication with the SAS and receives information of when and where to use the 3.5GHz channels. The SAS has to be approved by the FCC before it can be deployed. Since the SAS is the central coordinator for this spectrum, it needs to have a lot of information about the network and devices. In fact, FCC mandates most of this information to be contained in the SAS. FCC's Report and Order outlines a sample system with SAS(s) as shown in Figure 1. If there are multiple SASs, they are supposed to be synchronized with each other. However, the FCC does not specify details of how the SAS have to be implemented and what information has to be synchronized.

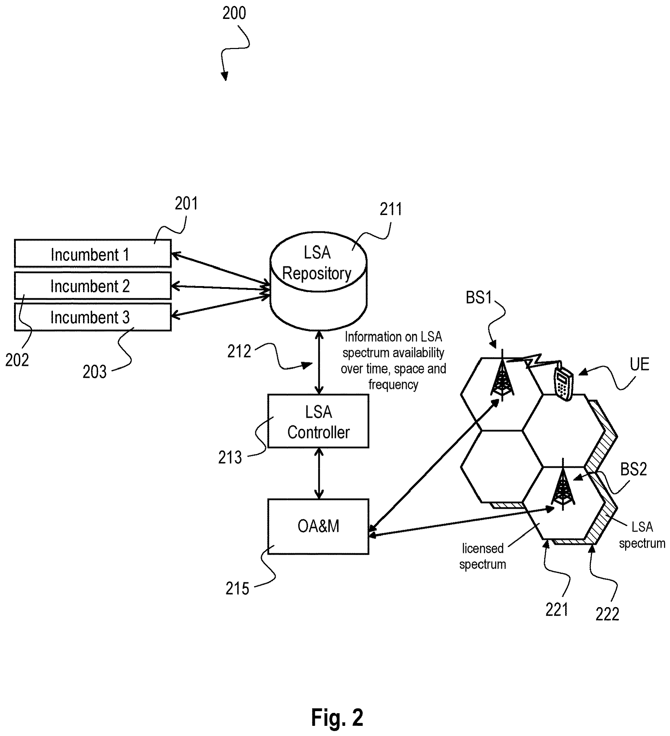

The methods and devices described hereinafter may be applied in LSA (Licensed Shared Access) systems, e.g. LSA systems 200 as shown in Fig. 2, ASA (Authorized Shared Access) systems and CSS (Cloud Spectrum Services) systems. The LSA (Licensed Shared Access) concept was recently developed by RSPG (Radio Spectrum Policy Group) on a European level. The objective is to propose a new way for answering to the operators' needs for more spectrum. It is expected that no more dedicated spectrum will be available for cellular operators for mobile communications in the future. LSA thus proposes mechanisms for introducing shared spectrum based solutions, i.e. mobile cellular operators will have access to additional licensed spectrum from other licensees (like public safety, government. etc.) which they normally would not get access to. LSA is based on a similar solution as ASA (Authorized Shared Access). ASA, however, is limited to IMT spectrum while LSA is also addressing non-IMT bands. Both exist on a rather conceptual level for the time being.

A related technology is CSS (Cloud Spectrum Services) which addresses the same framework as LSA and ASA, but introduces more detailed implementation solutions. On a regulatory level, there is massive interest for LSA/ASA/CSS, in particular in Europe. CEPT WG FM has agreed to launch a corresponding project team. ETSI RRS has finalized the set-up of a so-called SRDoc (System Reference Document) which targets in particular the 2.3-2.4 GHz Band which is expected to be one of the most straightforward candidates for shared spectrum usage. This is also acknowledged by CEPT WG FM. CEPT has taken the inputs into account in its CEPT WG FM project teams PT52 and PT53. While current activities focus on the 2.3-2.4 GHz band in Europe, it should be noted that the usage of the LSA concept is not limited to any specific frequency band. In fact, it is expected that the 2.3-2.4 GHz represents a first exercise and in the future LSA usage will be extended to other bands.

The methods and devices described hereinafter may be applied in WiFi and Bluetooth systems or any near field communication (NFC) technology. WiFi is a local area wireless computer networking technology that allows electronic devices to connect to the network, mainly using the 2.4 gigahertz (12 cm) UHF and 5 gigahertz (6 cm) SHF ISM radio bands. The Wi-Fi Alliance defines Wi-Fi as any "wireless local area network" (WLAN) product based on the IEEE 802.11 standards. However, the term "Wi-Fi" is used in general English as a synonym for WLAN since most modern WLANs are based on these standards. Many devices can use WiFi, e.g. personal computers, video-game consoles, smartphones, digital cameras, tablet computers and digital audio players. These can connect to a network resource such as the Internet via a wireless network access point. Such an access point (or hotspot) has a range of about 20 meters indoors and a greater range outdoors.

Bluetooth is a wireless technology standard for exchanging data over short distances (using short-wavelength UHF radio waves in the ISM band from 2.4 to 2.485 GHz) from fixed and mobile devices, and building personal area networks (PANs). It can connect several devices, overcoming problems of synchronization.

The methods and devices described hereinafter may be applied in LTE FDD mode as well as in LTE TDD mode systems, e.g. LTE mode systems having a type 1 LTE frame structure or LTE mode systems having a type 2 LTE frame structure. The type 1 LTE frame includes 10 sub-frames 204 each having two slots 206. A basic type 1 LTE frame has an overall length of 10 milliseconds. The type 2 LTE frame has an overall length of 10 milliseconds. The 10 ms frame comprises two half frames, each 5 ms long.

The methods and devices described hereinafter may be applied in MIMO systems. Multiple-input multiple-output (MIMO) wireless communication systems employ multiple antennas at the transmitter and at the receiver to increase system capacity and to achieve better quality of service. In spatial multiplexing mode, MIMO systems may reach higher peak data rates without increasing the bandwidth of the system by transmitting multiple data streams in parallel in the same frequency band.

The FCC released a Report and Order on April 17^{th}, 2015 "FCC REPORT AND ORDER AND SECOND FURTHER NOTICE OF PROPOSED RULEMAKING, FCC 15-47, April 21^{st} 2015" outlining the rules for operating wireless devices in the 3.5GHz band that spans from 3550 - 3700 MHz. FCC released this spectrum for sharing with the incumbents, which means that the incumbents get priority in that band and it can be used by broadband devices when (and where) incumbents are not using the spectrum. The incumbents in this band include DoD radars. There are two additional tiers of spectrum users in addition to the incumbents namely the Priority Access (PA) and General Authorized Access (GAA). The Priority Access Licenses (PAL) users get protection from GAA users which is similar to unlicensed spectrum.

The FCC also mandates a Spectrum Access System (SAS) that will coordinate the spectrum use between the incumbents, PA and GAA. The SAS is central to this band, and no tier 2 or tier 3 device can operate unless it is in constant communication with the SAS and receives information of when and where to use the 3.5GHz channels. The SAS has to be approved by the FCC before it can be deployed. Since the SAS is the central coordinator for this spectrum, it needs to have a lot of information about the network and devices. In fact, FCC mandates most of this information to be contained in the SAS. FCC's Report and Order outlines a sample system with SAS(s) as shown in Figure 1. If there are multiple SASs, they are supposed to be synchronized with each other. However, the FCC does not specify details of how the SAS have to be implemented and what information has to be synchronized.

In the following, access points (APs) and user equipments (UEs) are described. The term AP can be broadly interpreted. In some cases, it may be rather an eNB, Small Cell, Femto/Pico/Micro/Macro Cell, etc. Also, in the context of SAS, the term CBSD is used instead of AP. Note that the term "AP" encapsulates all these technologies/terms. A UE may act as a AP/CBSD, in this case the linkage to the SAS controller is maintained through a different (i.e. non-SAS) connection, e.g. through a dedicated licensed LTE band. In this case, it is the UE classical modem that interacts with a novel SAS stack in order to make the classical (i.e., non-SAS) UE compliant to SAS requirements.

Negotiation between AP/CBSD may be performed in order to query a UE or multiple/all UEs whether they are SAS compatible. Only if they are, the SAS stack is added and SAS bands are supported. Otherwise, SAS is not offered as a service to UEs. I.e., a UE may receive query from AP/CBSD on SAS compatibility and/or intention to use SAS bands, then answer to query by either acknowledging or declining intended usage of SAS bands/services.

Fig. 1 is a block diagram of a Spectrum Access System (SAS) 100 for spectrum management according to the FCC regulation. The SAS system includes an exemplary number of two central SAS coordinators 131, 132 for coordinating spectrum use between incumbents, PA (priority access) users and GAA (general authorized access) users according to FCC (Federal Communications Commission) standardization.

The SAS communication system 100 includes an exemplary number of two SAS entities (also referred to as SAS coordinator or SAS controller) 131, 132, FCC databases 141 and an ESC (Environmental Sensing Capability) entity 142 which are coupled between each other. An exemplary number of four CBSD (Citizen Broadband Radio Service Devices) entities 111, 112, 113, 114 are coupled with the SAS1 entity 131, where CBSD1, CBSD2 and CBSD3 are coupled via a proxy network manager 121. The CBSD devices may be coupled to users 101, 102, 103, 104. In the example of Fig. 1 the CBSD1 device is connected to a first user 101 and a second user 102 while CBSD4 device is connected to a third user 103.

The SAS entities 131, 132 have the following functionality: Enact and enforce all policies and procedures developed by the SAS Administrator; Determine and provide to CBSDs the permissible channels or frequencies at their location; Determine and provide to CBSDs the maximum permissible transmission power level at their location; Retain information on, and enforce, Exclusion Zones and Protection Zones; Communicate with the ESC to obtain information about federal Incumbent User transmissions and instruct CBSDs to move to another frequency range or cease transmissions; Ensure that CBSDs operate in geographic areas and within the maximum power levels required to protect federal Incumbent Users from harmful interference; Register and authenticate the identification information and location of the CBSDs; Ensure that CBSDs protect non-federal incumbent users from harmful interference; Protect Priority Accessed Licensees from interference caused by other PALs and from GAA users; Facilitate Coordination between GAA users operating Category B CBSDs; Resolve conflicting uses of the band while maintaining a stable radio frequency environment; Ensure secure and reliable transmission of information between the SASs and the GBSDs.

Fig. 2 is a block diagram of a Licensed Shared Access (LSA) system 200 as currently defined in Europe including an LSA controller 213 for adapting spectrum usage. The license shared access (LSA) communication system 200 includes a LSA repository 211, an LSA controller 213, an OA&M entity, an exemplary number of three incumbents 201, 202, 203 and a public mobile communication system having an exemplary number of two base stations BS1, BS2 and one exemplary user equipment UE connected to base station BS1. The public mobile communication system provides a licensed spectrum 221 and an LSA spectrum 222.

The LSA repository 211 may store information on LSA spectrum availability over time, space and frequency. The LSA controller 213 may be used for controlling access to the LSA system. The OA&M entity 215 may be used for maintaining operation of the LSA system.

While this disclosure mainly addresses the SAS case (US scenario) as shown in Fig. 1, the basic principles are also applicable to the European LSA context as shown in Fig. 2.

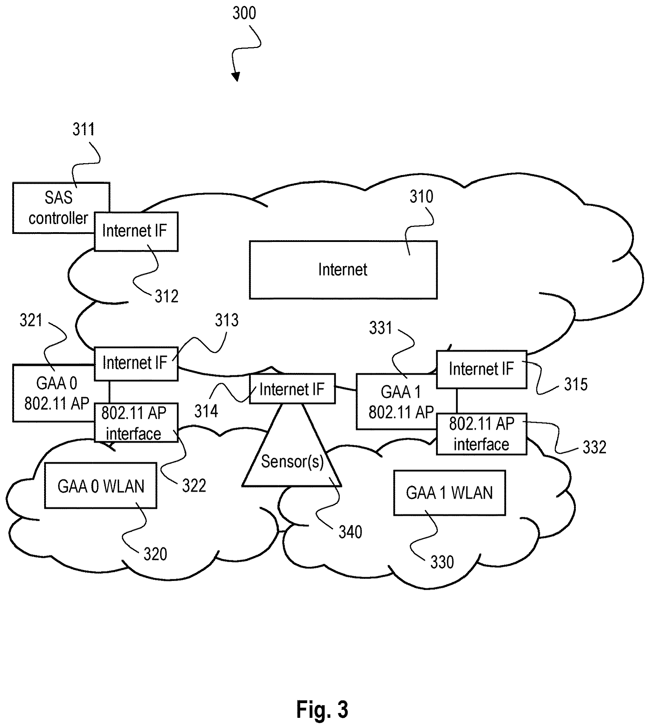

Fig. 3 is schematic diagram illustrating an exemplary communication system 300 in which WiFi APs 321, 331 are used to integrate WiFi networks 320, 330 in an SAS system controlled by an SAS controller 311 according to the disclosure. The example of Fig. 3 is based on a SAS system 100 as described above with respect to Fig. 1. The SAS system includes an SAS controller 311 that may correspond to the SAS1 entity 131 or the SAS2 entity 132 as described above with respect to Fig. 1. Alternatively to the SAS system an LSA system 200 as described above with respect to Fig. 2 can be applied in which SAS controller 311 may be an LSA controller 213 as described above with respect to Fig. 2.

In the communication system 300 of Fig. 3 a first WiFi (also called WLAN) network 320 is used as a first GAA tier 3 network in the SAS system and a second WiFi (also called WLAN) network 310 is used as a second GAA tier 3 network in the SAS system. Both WiFi networks 320, 310 are coupled by the Internet 310 with the SAS controller 311 of the SAS system. The coupling of the first WiFi network 320 is via the 802.11 AP interface 322, the GAA 0 802.11 AP 321, the Internet interface 313 (e.g. an IP interface) and the Internet interface 312 (e.g. IP interface). The coupling of the second WiFi network 310 is via the 802.11 AP interface 332, the GAA 1 802.11 AP 331, the Internet interface 315 (e.g. IP interface) and the Internet interface 312 (e.g. IP interface). Both WiFi networks 320, 310 may be coupled with each other (both networks 320, 310 overlap as can be seen in Fig. 3). One or more sensors 340 may be coupled via the internet interface 314 and the internet interface 312 with the SAS controller 311.

Figure 3 illustrates the concept according to this disclosure, where WiFi is integrated into SAS through an Application-Layer communication through standardized APIs, i.e. the solution is applicable to as-is WiFi components. The main points of this concept are: 1) The SAS controller 311 has administrative access through an IP interface 312 to the devices used by GAA users as 802.11 Access Points 321, 331. 2) 802.11 (and other Wireless) Protocol(s) Aware Sensors 340 may be deployed in the SAS controlled geographical area in order to provide spectrum usage intelligence to the SAS Controller 311. 3) An optional software-configurable radio chain to antenna switch added to 802.11 interfaces 322, 332. 4) Optionally; that the 802.11 SAS controller 311 in addition to the common 802.11 management actions may switch radio chains to Virtual Antenna Ports in the Aps, 321, 331. This way, spectrum resources (e.g. antenna polarization and coverage) may be allocated by the SAS controller 331 to GAA Aps 321, 331 in a finer detail. 5) Radar Detection and Avoidance can be delegated to the GAA 802.11 interfaces 322, 332 in a similar scheme used in 802.11 DFS in the 5GHz band.

The SAS Controller 311 may communicate with the GAA APs 321, 331 and the optional Sensors 340 through an Internet 310, i.e. through an 802.11 accessed IP network in a dedicated channel in the 3.5GHz band, the Internet or another Regional or Metropolitan Area IP Network, for example. In one example, SAS controller 311 - GAA AP layer three RTT (round-trip time) should be less than about 5ms.

Note: There is currently no standards project active to adapt 802.11 to SAS 3.5 GHz needs. One reason lies in the fact that SAS is a centralized system (building on a central SAS controller) while WiFi is a distributed system. Using the concept according to this disclosure will enable as-is WiFi with a 3.5 GHz front-end into the SAS eco-system.

Current SAS Solutions do NOT allow for the usage of WiFi as GAA user, because WiFi does not include key SAS features such as i) connection to central SAS node, ii) centralized coordination of spectrum access through SAS node, etc. In contrast, by using the concept as presented in this disclosure, minimum invasive features to WiFi can be introduced, which allows WiFi to be used as SAS GAA node.

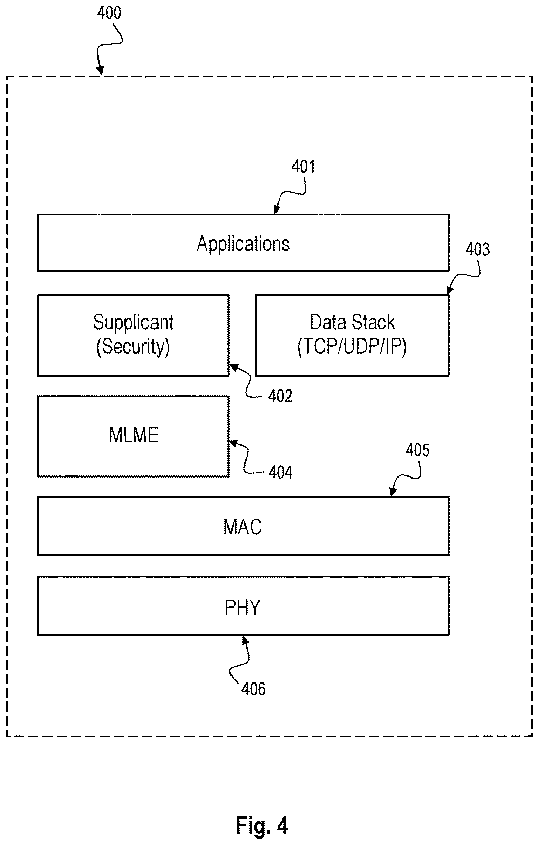

Fig. 4 is a schematic diagram illustrating an exemplary WiFi stack 400. The WiFi stack 400 can be a typical WiFi product stack compliant to the 802.11 protocol. The WiFi stack 400 includes (from bottom to top) a physical (PHY) layer 406, a media access control (MAC) layer 405, a data stack 403, e.g. for TCP/UDP/IP communication, and an applications layer 401. Optionally a MAC sublayer management entity (MLME) and a supplicant (security) layer 402 may be included. The WiFi stack 400 may for example included in the 802.11 AP interfaces 322, 332 of the communication system 300 as described above with respect to Fig. 3. MLME stands for "MAC Sublayer Management Entity". It provides various management procedures such as association, authentication etc.

As presented in this disclosure, existing 802.11 Access Points can be extended in a minimum invasive way such that WiFi equipment can be made compliant to SAS and can be used as SAS GAA equipment. This can be achieved by adding GAA 802.11 Access Points 321, 331; a second network interface (internet interface) 313, 315, an optional list of spectrum usage intentions configurable by the GAA AP operator, and an optional software configurable antenna switch.

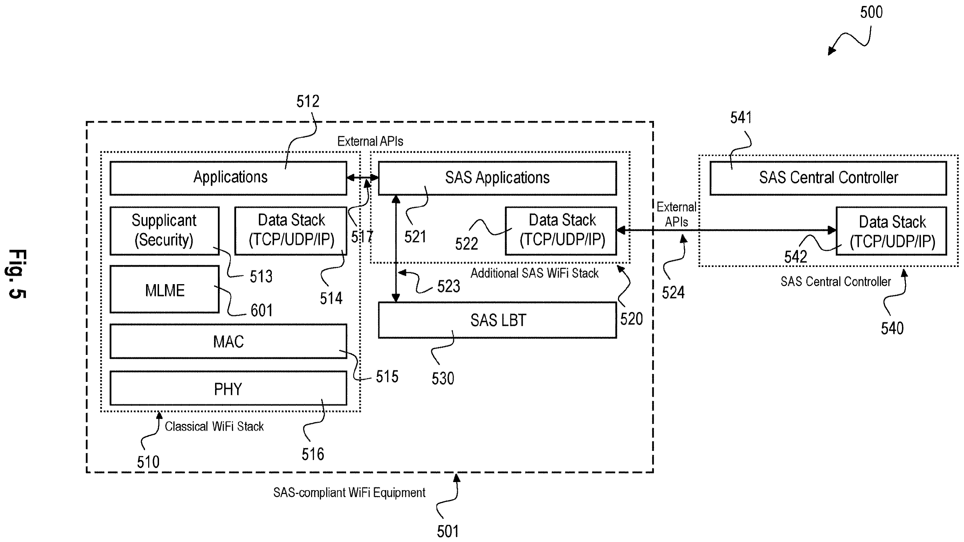

Fig. 5 is a schematic diagram illustrating an exemplary SAS compliant WiFi equipment 500 according to the disclosure.

The idea is to add a second stack 520 into a WiFi equipment 400 which only interfaces through external standardized APIs 517 with the WiFi stack 400 and is thus minimum invasive. The WiFi stack 400 corresponds to the WiFi stack 400 described above with respect to Fig. 4. The additional SAS WiFi stack 520 includes an SAS applications layer which interacts through the external APIs 517 with the applications layer 401 of the WiFi stack 400. The additional SAS WiFi stack 520 may include a data stack 522 with TCP/UDP/IP functionality that may interact (via external APIs 524) with the data stack 542 with TCP/UDP/IP functionality of the SAS central controller 311 that may correspond to the SAS controller 311 described above with respect to Fig. 3. Alternatively, the SAS applications layer 521 of the additional SAS WiFi stack 520 may directly (without data stack) communication with the SAS central controller applications layer 541 of the SAS central controller 311. Alternatively, an SAS LBT (Listen Before Talk) stack 530 may be included in the WiFi stack 400 which may interact via API interface 523 with the additional SAS WiFi stack 520. This LBT stack 530 can detect the Incumbents before transmitting data. If an Incumbent is available the WiFi network can be made silent.

The additional SAS WiFi stack 520 can provide all SAS related features. The key concept according to this disclosure is to include the "Additional SAS WiFi Stack" 520 into the original WiFi equipment 400. Since it only interacts through external interfaces 517 with the Applications layer 401, the approach is minimum intrusive. The process is as follows: 1) If no incumbent is detected, the "SAS Applications" layer 521 accesses WiFi through standard external interfaces and activates WiFi. 2) If an incumbent is detected (either through interfacing with the SAS Central Controller 311 or (optionally) through LBT 530 in the WiFi Equipment 400, then the SAS Application 521 puts the WiFi application on hold. Note that there is no need to fully terminate the connection (which would be the standard way of proceeding). Rather, the connection can be maintained but without accessing the medium any more while the Incumbent is present. Once the incumbent is gone, using the existing connection can be simply continued. 3) The SAS Applications layer needs to perform the following tasks: a) Access to SAS Central Controller 311 in order to request information on presence of Incumbent; b) Provide sensing data to SAS Central Controller 311 in case that the Incumbent is detected through the SAS LBT feature 530 (in case it is available); c) Authorize usage of WiFi channel(s) to WiFi stack 400 through external interfaces 517 (minimum intrusive); d) Put WiFi Communication on hold while incumbent is present or move WiFi to another channel (following indications from SAS Central Controller 311).

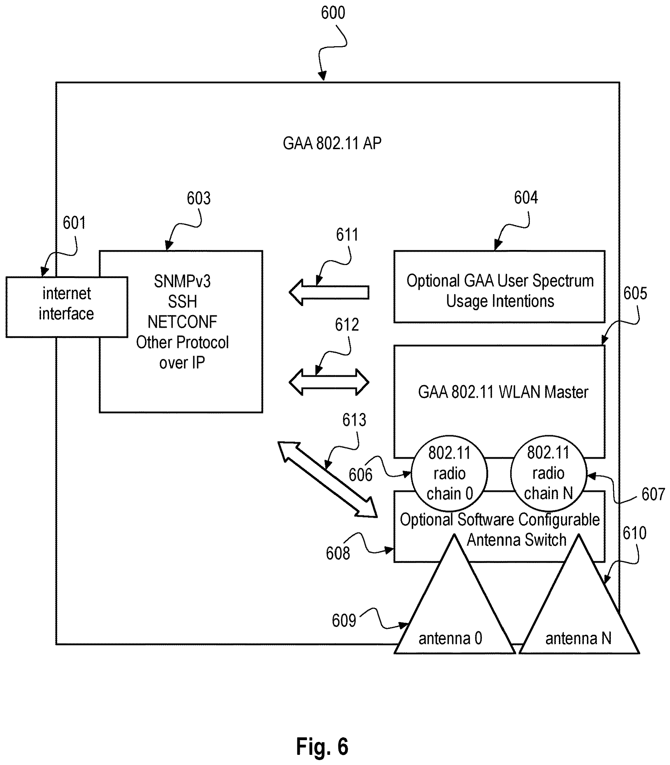

With respect to Figures 5 and 6, instead of a GAA WiFi AP, any other GAA entity can be used, including a GAA eNB, GAA CBSD (Citizen Broadband Service Device), GAA Small Cell, GAA Pico/Micro/Macro/etc. Cell, etc. Also, the same may be applied to the UE side, i.e. an existing modem (such as an LTE, MuLTEfire, WiFi, WiGig, etc. modem) can be complemented by an external SAS stack. This is in particular useful if the UE takes the role of a GAA CBSD/AP for example. It is indeed possible that a LTE (or any other technology such as WiFi, 5G based on 3GPP Rel. 15 and beyond, etc.) link is used to connect the SAS stack to the SAS controller in order to maintain the expected information exchange with this entity (including triggers to vacate the band when the priority user (typically incumbent and/or PAL user) arrive and need to retake the band, or operational assignments concerning bands, power levels, etc. configurations typically with the objective to meet interference requirements). Note that the approach is not limited to GAA usage and can possibly also be applied to PAL or jointly to PAL and/or GAA usage. Also, the same approach can be used for the Licensed Shared Access (LSA) approach in order to make a classical (3GPP/WiFi/etc.) non-LSA eNB/AP and/or classical non-LSA UE compatible with the LSA scheme, i.e. an LSA stack would be added that is communicating with the classical (non-LSA) stack. Note also that CBRS/SAS and LSA are just examples for spectrum sharing schemes. This technology is applicable to any scheme where one user (group) has a different priority compared to another user (group) or other users (groups). To give an example, this may apply to Television White Space type of applications or vehicular applications in the 60 GHz band where Intelligent Transport Systems (ITS) systems may share the same bands (or may at least overlap, as it is the case for the current European 63-64 GHz regulation for ITS which is overlapping with 2 WiGig band, in the future it is expected that this is modified such that the overlap is only affecting a single WiGig channel (and not two of them)) and a prioritization of one system over another (typically a prioritization of the ITS system over commercial WiGig application) may be required.

Note that the illustrated interactions of the classical stack (e.g., WiFi Stack) with the SAS stack on the Application Layer (e.g., "Driver-to-Driver" type of interaction) is only an example. This interaction can also be implemented e.g.
- SAS Application Layer to/from classical system (e.g., WiFi) Application Layer, Supplicant (Security) Layer, Data Stack Layer, MLME Layer, MAC Layer and/or PHY Layer.
- SAS Data Stack Layer to/from classical system (e.g., WiFi) Application Layer, Supplicant (Security) Layer, Data Stack Layer, MLME Layer, MAC Layer and/or PHY Layer.
- It is also possible that the SAS LBT functionality interacts with the classical system (e.g., WiFi): In this case, SAS LBT connects to/from classical system (e.g., WiFi) Application Layer, Supplicant (Security) Layer, Data Stack Layer, MLME Layer, MAC Layer and/or PHY Layer.
- It is possible that the SAS stack is complemented by further Layers (e.g., Security Layer, etc.). In this case, the upper interactions apply in the same way between any new Layer and the classical system (e.g. WiFi), i.e. to/from classical system (e.g., WiFi) Application Layer, Supplicant (Security) Layer, Data Stack Layer, MLME Layer, MAC Layer and/or PHY Layer.

Fig. 6 is a schematic diagram illustrating an exemplary SAS compliant GAA WiFi access point (AP) 600 according to the disclosure. The GAA WiFi AP 600 may correspond to one of the GAA 802.11 access points 321, 331 as described above with respect to Fig. 3. The GAA WiFi AP 600 may correspond to the SAS compliant WiFi equipment 500 (i.e. AP) 500 as described above with respect to Fig. 5. The GAA WiFi AP 600 includes an exemplary number of N 802.11 radio chains 606, 607 each one controlling a respective antenna 609, 610 through optional software configurable antenna switch 608. The radio chains 606, 607 are interacting with a GAA 802.11 WLAN Master module 605. The spectrum is adjusted based on optional GAA user spectrum usage intentions 604. The GAA WiFi AP 600 includes an internet interface 601 which is coupled to an network stack 603 with SNMPv3, SSH, NETCONF and/or other protocol over IP functionality. The GAA WiFi AP 600 can use the internet interface 601 for connection to the Internet, e.g. the internet 310 shown in Fig. 3 to interact with the SAS controller 311. The GAA WiFi AP 600 can use the 802.11 radio chains 606, 607 with antennas 609, 610 for connection to the WLAN, e.g. to GAA 0 WLAN 320 and/or GAA 1 WLAN 330 as shown in Fig. 3. The GAA WiFi AP 600 includes a first (e.g. unidirectional) interface 611 from optional GAA user spectrum intentions module 604 to network stack 603 for internet connection. The GAA WiFi AP 600 includes a second (e.g. bidirectional) interface 612 between GAA 802.11 WLAN Master 605 and network stack 603. The GAA WiFi AP 600 includes a third (e.g. bidirectional) interface 613 between antenna switch 608 and network stack 603.

In the following, a detailed implementation example of the GAA WiFi AP 600 is described. The GAA 802.11 Access Points 600 may be managed by the SAS Controller 311 (see Fig. 3) through their internet interfaces. SSH, SNMPv3, NETCONF or some other protocol may be used for management. The SAS Controller 311 may be the only one who initiates SAS-APs communications, if GAA 802.11 AP operators were configuring their spectrum usage intents in their APs or some other place accessible by the SAS controller 311. The SAS controller 311 may be allowed to configure all 802.11 parameters in the GAA APs and optionally switch radio chains 606, 607 to antenna ports 609, 610 in the APs. The SAS Controller 311 may be implemented as an automaton, that instructs configuration changes to tier-2 and tier-3 APs in the SAS control area, in order to protect the incumbents and tier-2 users from lower tier interference and optimize spectrum usage efficiency. In addition to common 802.11 management actions the SAS Controller 311 may switch radio chains 606, 607 to Virtual Antenna Ports in the APs. This way, spectrum resources (e.g. antenna polarization and coverage) may be allocated by the SAS controller 311 to Aps 600 in a finer detail.

The Spectrum Access Control process for an 802.11 GAA AP 600 as shown in Fig. 6 may be as follows: 1) If no incumbent is detected and the GAA AP operator intents to use the spectrum, then the SAS Controller 311 provisions a channel and performs the appropriate 802.11 management actions in the GAA AP 600. 2) If an incumbent is detected (either through interfacing with the SAS Central Controller 311 directly or (optionally) through a SAS Controller Sensor 340 (see Fig. 3), or a measurement obtained by the SAS Controller 311 through one or more Aps 321, 331 or stations, then the SAS Controller 311 puts the GAA 802.11 WLAN access on hold. Note that the 802.11 AP can be fully turned-off (which would be the standard way of proceeding). Optionally, a longer beacon interval can be set and a notice can be added to its stations that the medium is not available now -this would require more modifications to the 802.11 stack. Note that radar detection and avoidance can be delegated to APs and STAs in a similar scheme used in 802.11 DFS in the 5GHz band.

The SAS Controller 311 can make use of a Database Management System (DBMS) to store the following exemplary data structure: area configuration data, that is extensive information for every wireless interface in every AP in the control area, e.g. a table where every RF processing chain and antenna chain combination is a row and the following some example fields; service-node-ID, IF-ID, virtual-antenna-port-ID, latitude, longitude, elevation, interface capabilities, antenna type, antenna orientation, antenna azimuth, antenna vertical tilt, antenna gain, antenna horizontal beam width, antenna vertical beam width, antenna cross-polar ratio, antenna copular front to back ratio, etc., geographical data for the control area and the neighboring areas controlled by other SAS Controllers, e.g. the NASA spatial data, alternatively, the SAS Controller can have low-latency access to a GIS. The data structure may further include policies, metrics, statistics and history.

The SAS controller may provide an API (it may be REST, i.e. Representational State Transfer) to share information with other SAS controllers.

In the following examples for SAS controller GAA 802.11 APs communication are described. A common message exchange in between the SAS controller and an AP may have the following form. A communication channel in between the SAS controller and an AP is established over SSH, SNMPv3 or some other protocol. The controller sends one or more commands to the AP. The AP responds to the SAS controller with the command(s) output-status.

The SAS Controller may be the only one who initiates SAS-APs communications, if PAL owners and GAA device operators were configuring their spectrum usage intents in their APs or some other place accessible by the SAS Controller. The SAS Controller does not need access to the Top Tier APs. The SAS does not need to communicate anything directly to the stations, communication can be through proxy. E.g. the SAS controller can instruct an AP to change channel, the AP changes channel and its clients follow. The SAS Controller may then ask its Sensors or the AP for channel state.

In the following examples for SAS Controller Spectrum Sensing are described. A Sensor is a wireless standard protocol(s) analyzer placed in the geographical proximity of the SAS controller area. A network of these sensors may provide air intelligence to the SAS controller.

Intelligence provided to the SAS Controller by protocol aware sensors allows to use finer grade mechanisms that maximize channel utilization while minimizing coordination overhead; save on meta-data volume and cut response times. Additionally, the SAS controller may get measurements from GAA 802.11 AP interfaces in monitor mode or request from an AP to request measurements from one or more of its associated STA(s) (e.g. according to standard 802.11-2012 10.9.7, Mandatory or optional Measurements: 8.4.2.23).

Interference from not-necessary overlaps in spatial coverage may be mitigated by the SAS controller by coordinating the following mechanisms in the access points: Antenna Polarization - two polarizations may be used with enough effective isolation, e.g. vertical and horizontal. The SAS controller may assign the same channel to both WLAN1 and WLAN2 but vertical polarization to WLAN1 and horizontal polarization to WLAN2. Single User Beamforming, switched Sector-Antenna-Arrays, e.g. six H-60 or three H-120 sector antennas in place of each Omnidirectional antenna and antennas with software configured electrical or mechanical tilt. Multi-User Beamforming if available appears to be more useful in improving the SNR to stations close to their AP and in a simple implementation this can be delegated to the AP.

In the following examples for SAS Controller Channel Provisioning are described. Example band: 3.55-3.7 GHz. PAL: 70MHz in the 3.55-3.65GHz band. Rules define PAL licenses in terms of 10 MHz spectrum blocks allocated for three years duration over spatial regions as small as a census block. A PAL owner can acquire multiple PAL licenses and stack them together in space and time to create up to 40 MHz of spectrum chunks, valid over a very large spatial region. GAA: allowed throughout the 150MHz band. 5MHz, 10MHz, 20MHz, and 40MHz channels may be used by 802.11 PAL devices. 5MHz, 10MHz, 20MHz, 40MHz and 80MHz channels may be used by 802.11 GAA devices. The SAS controller may allocate virtual channels, e.g. two 20MHz channels compromised of two continuous 10MHz channels in orthogonal polarizations instead of two 10MHz channels with no restrictions in polarization or allow two 40MHz HT 802.11 channels or four 20MHz channels with polarity and spatial constrains to tier-3 access points and other similar temporary virtual channel configurations.

In the following examples for Incumbent and tier-2 Protection from lower Tier Interference are described. Radar detection and avoidance may be delegated to APs and STAs in a similar scheme used in 802.11 DFS in the 5GHz band. The SAS Controller can coordinate the 802.11 APs for the rest based on its sensors. Spectral usage data can be acquired by the Access Points or Incumbent and Tier-2 user signals.

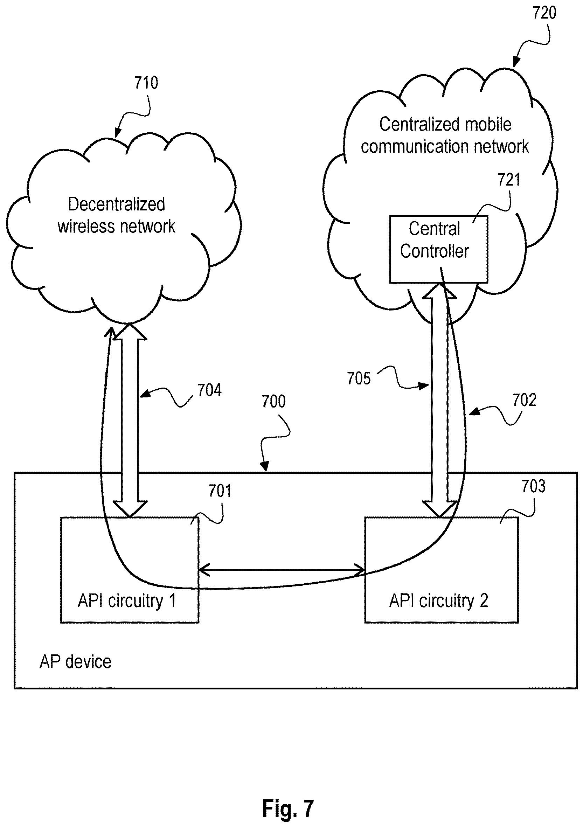

Fig. 7 is schematic diagram illustrating an access point (AP) device 700 according to the disclosure. The AP device 700 is an exemplary representation of a GAA 802.11 AP 322, 331 as described above with respect to Fig. 3 or of an SAS compliant WiFi equipment 500 as described above with respect to Fig. 5 or of a GAA 802.11 AP 600 as described above with respect to Fig. 6.

The AP device 700 includes a first interface 704 with a decentralized wireless communication network 710, e.g. a WiFi network 320, 330 as described above with respect to Fig. 3. The AP device 700 includes a second interface 705 with a central controller 721 of a centralized mobile communication network 720, e.g. an SAS controller 311 as described above with respect to Fig. 3. The AP device 700 includes a first application programming circuitry 701, e.g. a WiFi stack 400 as described above with respect to Figs. 4 and 5. The AP device 700 includes a second application programming circuitry 702, e.g. an additional SAS WiFi stack 520 as described above with respect to Fig. 5.

The first application programming circuitry 701 is configured to control accessing the decentralized wireless communication network 710 via the first interface 704. The second application programming circuitry 703 is configured to interact with the central controller 721 of the centralized mobile communication network 720 via the second interface 705 in order to allow the central controller 721 take over control 702 of the decentralized wireless communication network 710.

The second application programming circuitry 703 may be configured to interact with the first application programming circuitry 701 via a first external application programming interface (API) 706, e.g. an API 517 as described above with respect to Fig. 5.

The second application programming circuitry 703 may be configured to interact with the central controller 721 via a second external application programming interface (API) (through the second interface 705).

The second application programming circuitry 703 may include a data stack 522 (see Figure 5) configured to interact with a corresponding data stack 542 of the central controller 721, 311 via the second external API. The second interface with the central controller 721 may include an Internet Protocol (IP) interface, e.g. as described above with respect to Figures 3 to 6.

The first application programming circuitry 701 may include a decentralized wireless communication network stack, e.g. a WiFi stack 400 as described above with respect to Figures 4 and 5, comprising a PHY layer 406, a MAC layer 405, a data stack 403 and an application program layer 401.

The first application programming circuitry 701 may include a WiFi stack, e.g. a WiFi stack 400 as described above with respect to Figures 4 and 5.

The centralized mobile communication network 720 may include a first tier network and a second tier network, e.g. according to an SAS system 100 as described above with respect to Fig. 1 or according to an LSA system 200 as described above with respect to Fig. 2. The first tier network and the second tier network may be radio networks of a Spectrum Access System (SAS) or radio networks of a Licensed Shared Access System (LSA), e.g. as described above with respect to Figs. 1 and 2. The central controller 721 may be an SAS central controller. The first tier network may, for example, be an Incumbent network and the second tier network may, for example, be a Priority Access License (PAL) network.

In one example implementation, the second application programming circuitry 703 may be configured to interact with the central controller 721 for integrating the decentralized wireless communication network 710 as a third tier network into the centralized mobile communication network 720. In one example implementation, the second application programming circuitry 703 may interact with the central controller 721 for integrating the decentralized wireless communication network 710 as a General Authorized Access (GAA) network into the centralized mobile communication network 720.

The second application programming circuitry 703 may be configured to interact with the central controller 721 for protecting at least the first tier network from interference of the decentralized wireless communication network 710.

The second application programming circuitry 703 may interact with the central controller 721 for allocating spectrum resources of the decentralized wireless communication network. These spectrum resources may comprise antenna polarization and coverage of the decentralized wireless communication network, for example.

The second application programming circuitry 703 may is configured to interact with the central controller 721 for detecting activity of a user of at least the first tier network.

In an exemplary implementation, the AP device 700 may include a Listen Before Talk (LBT) application programming circuitry 530 configured to detect activity of a user of at least the first tier network, e.g. as described above with respect to Fig. 5.

The LBT application programming circuitry 530 may be configured to detect activity of an Incumbent user of the first tier network and may be configured to detect activity of a Priority Access License user of the second tier network. The LBT application programming circuitry 530 may be configured to interact with the second application programming circuitry 703 via a third external API 523.

The second application programming circuitry 703 may interact with the central controller 721 for turning-off communication via the first interface 704 based on detecting activity of a user of at least the first tier network. The second application programming circuitry 703 may interact with the central controller 721 and the first application programming circuitry 701 for increasing a beacon interval for negotiating access to the AP device by stations of the decentralized wireless communication network 710 based on detecting activity of a user of at least the first tier network.

The second application programming circuitry 703 may interact with the central controller 721 and the first application programming circuitry 701 for noticing stations of the decentralized wireless communication network 710 that the first interface 704 is not available for communication, based on detecting activity of a user of at least the first tier network.

A first frequency band configured for communication of the decentralized wireless communication network 710 and a second frequency band configured for communication of the centralized mobile communication network 720 may overlap at least partially.

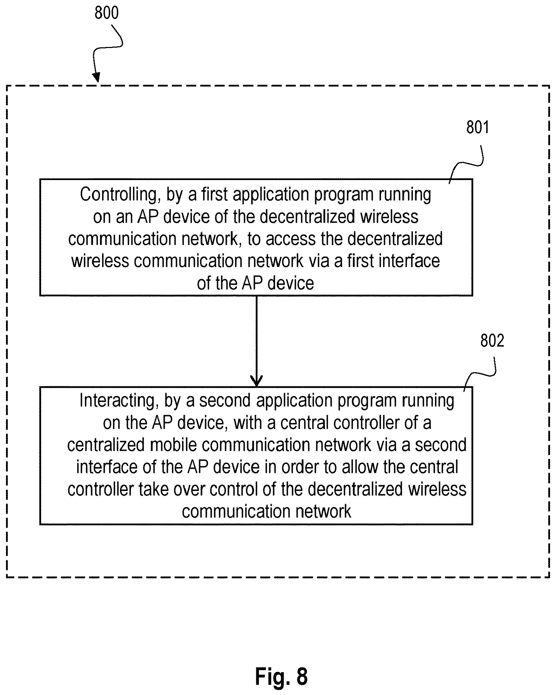

Fig. 8 is schematic diagram illustrating a method 800 for controlling a decentralized wireless communication network according to the disclosure.

The method 800 includes: controlling 801, by a first application program running on an AP device (e.g. AP device 700 described above with respect to Fig. 7) of the decentralized wireless communication network 710, to access the decentralized wireless communication network 710 via a first interface 704 of the AP device 700. The application program may have the same functionality as the API circuit 1, 701 described above with respect to Fig. 7.

The method 800 includes: interacting 802, by a second application program running on the AP device, with a central controller 721 of a centralized mobile communication network 720 via a second interface 705 of the AP device 700 in order to allow the central controller 721 take over control 702 of the decentralized wireless communication network 710.

The method 800 may further include: interacting, by the second application program, with the first application program via a first external application programming interface (API). The method 800 may further include: interacting, by the second application program, with the central controller via a second external application programming interface (API). The method 800 may further include: interacting, by the second application program, with the central controller by a communication between a data stack of the second application program and a corresponding data stack of the central controller.

The method 800 may include the other functionalities as described above with respect to Figure 7 and may be performed by a processor, e.g. a processor on which the functionalities of the API circuitries 701, 703 as described above with respect to Fig. 7 are implemented as APIs.

The methods, systems and devices described herein may be implemented as software in a Digital Signal Processor (DSP), in a micro-controller or in any other side-processor or as hardware circuit on a chip or within an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 1500 as described above with respect to Fig. 15 and the techniques described with respect to Figures 1 to 14. Such a computer program product may include a readable storage medium storing program code thereon for use by a processor, the program code comprising instructions for performing any of the methods as described above.

### EXAMPLES

The following examples pertain to further embodiments. Example 1 is an Access Point (AP) device comprising: a first interface with a decentralized wireless communication network; a second interface with a central controller of a centralized mobile communication network; a first application programming circuitry configured to control accessing the decentralized wireless communication network via the first interface, and a second application programming circuitry configured to interact with the central controller of the centralized mobile communication network via the second interface in order to allow the central controller take over control of the decentralized wireless communication network.

In Example 2, the subject matter of Example 1 can optionally include that the second application programming circuitry is configured to interact with the first application programming circuitry via a first external application programming interface (API).

In Example 3, the subject matter of any one of Examples 1-2 can optionally include that the second application programming circuitry is configured to interact with the central controller via a second external application programming interface (API).

In Example 4, the subject matter of Example 3 can optionally include that the second application programming circuitry comprises a data stack configured to interact with a corresponding data stack of the central controller via the second external API.

In Example 5, the subject matter of any one of Examples 1-4 can optionally include that the second interface with the central controller comprises an Internet Protocol (IP) interface.

In Example 6, the subject matter of any one of Examples 1-5 can optionally include that the first application programming circuitry comprises a decentralized wireless communication network stack comprising a PHY layer, a MAC layer, a data stack and an application program layer.

In Example 7, the subject matter of any one of Examples 1-6 can optionally include that the first application programming circuitry comprises a WiFi stack.

In Example 8, the subject matter of any one of Examples 1-7 can optionally include that the centralized mobile communication network comprises a first tier network and a second tier network.

In Example 9, the subject matter of Example 8 can optionally include that the first tier network and the second tier network are radio networks of a Spectrum Access System (SAS) or radio networks of a Licensed Shared Access System (LSA).

In Example 10, the subject matter of any one of Examples 8-9 can optionally include that the central controller is an SAS central controller.

In Example 11, the subject matter of any one of Examples 8-10 can optionally include that the first tier network is an Incumbent network and the second tier network is a Priority Access License (PAL) network.

In Example 12, the subject matter of any one of Examples 8-11 can optionally include that the second application programming circuitry is configured to interact with the central controller for integrating the decentralized wireless communication network as a third tier network into the centralized mobile communication network.

In Example 13, the subject matter of any one of Examples 8-12 can optionally include that the second application programming circuitry is configured to interact with the central controller for integrating the decentralized wireless communication network as a General Authorized Access (GAA) network into the centralized mobile communication network.

In Example 14, the subject matter of any one of Examples 8-13 can optionally include that the second application programming circuitry is configured to interact with the central controller for protecting at least the first tier network from interference of the decentralized wireless communication network.

In Example 15, the subject matter of any one of Examples 8-14 can optionally include that the second application programming circuitry is configured to interact with the central controller for allocating spectrum resources of the decentralized wireless communication network.

In Example 16, the subject matter of Example 15 can optionally include that the spectrum resources comprise antenna polarization and coverage of the decentralized wireless communication network.

In Example 17, the subject matter of any one of Examples 8-16 can optionally include that the second application programming circuitry is configured to interact with the central controller for detecting activity of a user of at least the first tier network.

In Example 18, the subject matter of any one of Examples 8-17 can optionally include a Listen Before Talk (LBT) application programming circuitry configured to detect activity of a user of at least the first tier network.

In Example 19, the subject matter of Example 18 can optionally include that the LBT application programming circuitry is configured to detect activity of an Incumbent user of the first tier network and configured to detect activity of a Priority Access License user of the second tier network.

In Example 20, the subject matter of any one of Examples 18-19 can optionally include that the LBT application programming circuitry is configured to interact with the second application programming circuitry via a third external API.

In Example 21, the subject matter of any one of Examples 8-20 can optionally include that the second application programming circuitry is configured to interact with the central controller for turning-off communication via the first interface based on detecting activity of a user of at least the first tier network.

In Example 22, the subject matter of any one of Examples 8-21 can optionally include that the second application programming circuitry is configured to interact with the central controller and the first application programming circuitry for increasing a beacon interval for negotiating access to the AP device by stations of the decentralized wireless communication network based on detecting activity of a user of at least the first tier network.

In Example 23, the subject matter of any one of Examples 8-22 can optionally include that the second application programming circuitry is configured to interact with the central controller and the first application programming circuitry for noticing stations of the decentralized wireless communication network that the first interface is not available for communication based on detecting activity of a user of at least the first tier network.

In Example 24, the subject matter of any one of Examples 1-23 can optionally include that a first frequency band configured for communication of the decentralized wireless communication network and a second frequency band configured for communication of the centralized mobile communication network overlap at least partially.

Example 25 is a method for controlling a decentralized wireless communication network, the method comprising: controlling, by a first application program running on an AP device of the decentralized wireless communication network, to access the decentralized wireless communication network via a first interface of the AP device; and interacting, by a second application program running on the AP device, with a central controller of a centralized mobile communication network via a second interface of the AP device in order to allow the central controller take over control of the decentralized wireless communication network.

In Example 26, the subject matter of Example 25 can optionally include: interacting, by the second application program, with the first application program via a first external application programming interface (API).

In Example 27, the subject matter of any one of Examples 25-26 can optionally include: interacting, by the second application program, with the central controller via a second external application programming interface (API).

In Example 28, the subject matter of Example 27 can optionally include: interacting, by the second application program, with the central controller by a communication between a data stack of the second application program and a corresponding data stack of the central controller.

In Example 29, the subject matter of any one of Examples 25-28 can optionally include that the second interface of the AP device comprises an Internet Protocol (IP) interface.

In Example 30, the subject matter of any one of Examples 25-29 can optionally include that the first application program comprises a decentralized wireless communication network stack comprising a PHY layer, a MAC layer, a data stack and an application program layer.

In Example 31, the subject matter of any one of Examples 25-30 can optionally include that the first application program comprises a WiFi stack.

In Example 32, the subject matter of any one of Examples 25-31 can optionally include that the centralized mobile communication network comprises a first tier network and a second tier network.

In Example 33, the subject matter of Example 32 can optionally include that the first tier network and the second tier network are radio networks of a Spectrum Access System (SAS) or radio networks of a Licensed Shared Access System (LSA).

In Example 34, the subject matter of any one of Examples 32-33 can optionally include that the central controller is an SAS central controller.

In Example 35, the subject matter of any one of Examples 32-34 can optionally include that the first tier network is an Incumbent network and the second tier network is a Priority Access License (PAL) network.

In Example 36, the subject matter of any one of Examples 32-35 can optionally include: interacting with the central controller for integrating the decentralized wireless communication network as a third tier network into the centralized mobile communication network.

In Example 37, the subject matter of any one of Examples 32-36 can optionally include: interacting with the central controller for integrating the decentralized wireless communication network as a General Authorized Access (GAA) network into the centralized mobile communication network.

In Example 38, the subject matter of any one of Examples 32-37 can optionally include: interacting with the central controller for protecting at least the first tier network from interference of the decentralized wireless communication network.

Example 39 is an Access Point (AP) circuitry comprising: a first interface with a WiFi network; a second interface with a central controller of a Spectrum Access System (SAS) network; a WiFi stack configured to control accessing the WiFi network via the first interface, and an additional SAS WiFi stack configured to interact with the central controller of the SAS network via the second interface in order to allow the central controller take over control of the WiFi network.

In Example 40, the subject matter of Example 39 can optionally include that the additional SAS WiFi stack is configured to interact with the WiFi stack via a first external application programming interface (API).

In Example 41, the subject matter of any one of Examples 39-40 can optionally include that the additional SAS WiFi stack is configured to interact with the central controller via a second external application programming interface (API).

In Example 42, the subject matter of Example 41 can optionally include that the additional SAS WiFi stack comprises a data stack configured to interact with a corresponding data stack of the central controller via the second external API.

In Example 43, the subject matter of any one of Examples 39-42 can optionally include that the second interface with the central controller comprises an Internet Protocol (IP) interface.

In Example 44, the subject matter of any one of Examples 39-43 can optionally include that the WiFi stack comprises a PHY layer, a MAC layer, a data stack and an application program layer.

In Example 45, the subject matter of any one of Examples 39-44 can optionally include that the SAS network comprises a first tier network and a second tier network.

In Example 46, the subject matter of any one of Examples 39-45 can optionally include that the first tier network is an Incumbent network and the second tier network is a Priority Access License (PAL) network.

In Example 47, the subject matter of any one of Examples 45-46 can optionally include that the additional SAS WiFi stack is configured to interact with the central controller for integrating the WiFi network as a third tier network into the SAS network.

Example 48 is a device for controlling a decentralized wireless communication network, the device comprising: means for controlling, by a first application program running on an AP device of the decentralized wireless communication network, to access the decentralized wireless communication network via a first interface of the AP device; and means for interacting, by a second application program running on the AP device, with a central controller of a centralized mobile communication network via a second interface of the AP device in order to allow the central controller take over control of the decentralized wireless communication network.

In Example 49, the subject matter of Example 48 can optionally include: means for interacting, by the second application program, with the first application program via a first external application programming interface (API).

Example 50 is a communication system, comprising: a Spectrum Access System (SAS) configured to share a radio spectrum between an incumbent first tier network, a priority access license (PAL) second tier network and a generalized authorized access (GAA) third tier network; and an Access Point (AP) device comprising: a first interface with a WiFi network; a second interface with a central controller of the SAS system; a WiFi stack configured to control accessing the WiFi network via the first interface, and an additional SAS WiFi stack configured to interact with the central controller of the SAS system via the second interface in order to allow the central controller take over control of the WiFi network.

In Example 51, the subject matter of Example 50 can optionally include that the additional SAS WiFi stack is configured to interact with the WiFi stack via a first external application programming interface (API).

In Example 52, the subject matter of any one of Examples 50-51 can optionally include that the additional SAS WiFi stack is configured to interact with the central controller via a second external application programming interface (API).

Example 53 is a communication system, comprising: a Licensed Shared Access (LSA) system configured to share a radio spectrum between an incumbent first tier network and a licensed second tier network; and an Access Point (AP) device comprising: a first interface with a WiFi network; a second interface with a central controller of the LSA system; a WiFi stack configured to control accessing the WiFi network via the first interface, and an additional LSA WiFi stack configured to interact with the central controller of the LSA system via the second interface in order to allow the central controller take over control of the WiFi network.

In Example 54, the subject matter of Example 53 can optionally include that the additional LSA WiFi stack is configured to interact with the WiFi stack via a first external application programming interface (API).

In Example 55, the subject matter of any one of Examples 53-54 can optionally include that the additional LSA WiFi stack is configured to interact with the central controller via a second external application programming interface (API).

Example 56 is a computer readable non-transitory medium on which computer instructions are stored which when executed by a computer cause the computer to perform the method of any one of Examples 25 to 38.

Example 57 is a method of adding a SAS stack to a WiFi product which interfaces with the WiFi product on an application Layer, wherein the SAS stack furthermore interfaces with an external SAS controller.

In Example 58, the subject matter of Example 57 can optionally include that an optional sensing component is added and is interfacing with the SAS stack, providing information on incumbent detection.

Example 59 is a user equipment, UE, comprising: a receiver, configured to receive a query from an access point or a Citizen Broadband Radio Service (CBSD), wherein the query indicates a compatibility of a sharable spectrum and/or an intention to use the sharable spectrum; and a transmitter, configured to transmit an answer to the query, the answer comprising an acknowledgement or a decline for using the sharable spectrum.

In Example 60, the subject matter of Example 59 can optionally include that the compatibility indicates if the UE is compatible to Spectrum Access System (SAS) bands and/or services of the access point or CBSD.

In addition, while a particular feature or aspect of the invention may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the invention may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present invention. This application is intended to cover any adaptations or variations of the specific aspects discussed herein.

## Claims

1. An Access Point (AP) device comprising:
a first interface with a decentralized wireless communication network;
a second interface with a central controller of a centralized mobile communication network;
a first application programming circuitry configured to control accessing the decentralized wireless communication network via the first interface, and
a second application programming circuitry configured to interact with the central controller of the centralized mobile communication network via the second interface in order to allow the central controller take over control of the decentralized wireless communication network.

2. The AP device of claim 1,
wherein the second application programming circuitry is configured to interact with the first application programming circuitry via a first external application programming interface (API).

3. The AP device of claim 1 or 2,
wherein the second application programming circuitry is configured to interact with the central controller via a second external application programming interface (API).

4. The AP device of claim 3,
wherein the second application programming circuitry comprises a data stack configured to interact with a corresponding data stack of the central controller via the second external API.

5. The AP device of one of the preceding claims,
wherein the second interface with the central controller comprises an Internet Protocol (IP) interface.

6. The AP device of one of the preceding claims,
wherein the first application programming circuitry comprises a decentralized wireless communication network stack comprising a PHY layer, a MAC layer, a data stack and an application program layer.

7. The AP device of one of the preceding claims,
wherein the first application programming circuitry comprises a WiFi stack.

8. The AP device of one of the preceding claims,
wherein the centralized mobile communication network comprises a first tier network and a second tier network.

9. The AP device of claim 8,
wherein the first tier network and the second tier network are radio networks of a Spectrum Access System (SAS) or radio networks of a Licensed Shared Access System (LSA).

10. The AP device of claim 8 or 9,
wherein the central controller is an SAS central controller.

11. The AP device of one of claims 8 to 10,
wherein the first tier network is an Incumbent network and the second tier network is a Priority Access License (PAL) network.

12. The AP device of one of claims 8 to 11,
wherein the second application programming circuitry is configured to interact with the central controller for integrating the decentralized wireless communication network as a third tier network into the centralized mobile communication network.

13. A method for controlling a decentralized wireless communication network, the method comprising:
controlling, by a first application program running on an AP device of the decentralized wireless communication network, to access the decentralized wireless communication network via a first interface of the AP device; and
interacting, by a second application program running on the AP device, with a central controller of a centralized mobile communication network via a second interface of the AP device in order to allow the central controller take over control of the decentralized wireless communication network.

14. The method of claim 13, comprising:
interacting, by the second application program, with the first application program via a first external application programming interface (API).

15. A computer readable non-transitory medium on which computer instructions are stored which when executed by a computer cause the computer to perform the method of claim 13 or 14.
